# EUROPÄISCHE PATENTSCHRIFT

(11) **EP 3 255 161 B1**
(45) Veröffentlichungstag und Bekanntmachung des Hinweises auf die Patenterteilung: **08.08.2018**
(21) Anmeldenummer: 17177799.8
(22) Anmeldetag: 13.05.2015
(51) Int. Cl.: C22C 9/04, C22F 1/08, F16C 33/06

(54) **SONDERMESSINGLEGIERUNG UND LEGIERUNGSPRODUKT**
SPECIAL BRASS ALLOY AND ALLOY PRODUCT
ALLIAGE DE LAITON SPÉCIAL ET PRODUIT D'ALLIAGE

(30) Priorität: 16.05.2014 DE 102014106933
(43) Veröffentlichungstag der Anmeldung: 13.12.2017
(62) Teilanmeldung aus: 15725263.6
(73) Patentinhaber: Otto Fuchs - Kommanditgesellschaft -, 58540 Meinerzhagen (DE)
(72) Erfinder: REETZ, Björn, 47800 Krefeld (DE); GUMMERT, Hermann, 41751 Viersen (DE); PLETT, Thomas, 57392 Schmallenberg (DE)
(74) Vertreter: Haverkamp, Jens

(56) Entgegenhaltungen:
- EP-A2- 1 712 648
- US-A1- 2009 022 620
- WEBER K ET AL: "Neuer Pb-freier Kupferwerkstoff fuer Gleitlageranwendungen in Verbrennungsmotoren und Getrieben", METALL : FACHZEITSCHRIFT FÜR METALLURGIE ; TECHNIK, WISSENSCHAFT, WIRTSC, GDMB-VERAG, CLAUSTHAL-ZELLERFELD, DE, Bd. 63, Nr. 11, 1. November 2009 (2009-11-01), Seiten 564-567, XP009157102, ISSN: 0026-0746

## Beschreibung

Die Erfindung betrifft eine Sondermessinglegierung und ein Produkt aus einer Sondermessinglegierung, das einer Reibbelastung unterliegt.

Für typische Reibanwendungen in einer Schmiermittelumgebung werden generell niedrige Reibwerte der verwendeten Legierung gefordert, wobei zusätzlich der Reibwert in vorgegebenen Grenzen an die jeweilige Anwendung, insbesondere den Reibpartner, den verwendeten Schmierstoff und die Reibbedingungen, wie Anpressdruck und Relativgeschwindigkeit, anpassbar sein sollte. Dies gilt insbesondere für Kolbenbuchsen, auf die hohe statische und dynamische Lasten wirken. Des Weiteren fordern Anwendungen mit hohen Relativgeschwindigkeiten der Reibpartner, wie sie beispielsweise für Axiallager eines Turboladers vorliegen, Legierungen, die neben einer reduzierten Wärmeentwicklung auch eine gute Wärmeableitung von der Reibfläche sicherstellen.

Durch die Reibleistung und den Ölkontakt entsteht auf der Lagerfläche eine tribologische Schicht mit angelagerten Schmiermittelkomponenten. Dabei wird eine gleichmäßige und zugleich hohe Anlagerungsrate der Schmiermittelbestandteile und deren Abbauprodukte gefordert, um an der Gleitschicht eine hinreichend stabile Adsorptionsschicht zu erhalten.

Ferner zeichnet sich ein geeigneter Lagerwerkstoff zusätzlich durch eine breitbandige Ölverträglichkeit aus, sodass der Aufbau der tribologischen Schicht weitgehend unempfindlich gegen die Wahl bestimmter Öladditive ist. Eine weitere Zielsetzung besteht darin, eine Legierung für Reibanwendungen mit guten Notlaufeigenschaften anzugeben, sodass eine hinreichende Standzeit unter Trockenreibungsbedingungen sichergestellt werden kann.

Für reibbelastete Bauteile ist zusätzlich wichtig, dass die eingesetzte Legierung eine hinreichende Festigkeit aufweist. Entsprechend sollte eine hohe 0,2 %-Dehngrenze vorliegen, um die unter Last auftretenden plastischen Verformungen möglichst gering zu halten. Zusätzlich wird gefordert, eine besonders harte und zugfeste Legierung anzugeben, um deren Widerstand gegen abrasive und adhäsive Belastungen zu erhöhen. Zugleich wird eine ausreichende Zähigkeit als Schutz gegen stoßende Beanspruchungen verlangt. In diesem Zusammenhang wird gefordert, die Anzahl der Mikrodefekte zu verringern und das von diesen ausgehende Defektwachstum zu verlangsamen. Dies geht einher mit der Forderung, eine Legierung mit einer möglichst hohen Bruchzähigkeit anzugeben, die weitgehend frei von Eigenspannungen ist.

Geeignete Legierungen für reibbeanspruchte Bauteile sind vielfach Sondermessinge, die neben Kupfer und Zink als Hauptbestandteile eine Zulegierung wenigstens eines der Elemente Nickel, Eisen, Mangan, Aluminium, Silizium, Titan oder Chrom aufweisen. Dabei erfüllen insbesondere Siliziummessinge die voranstehend genannten Anforderungen, wobei CuZn31Si1 eine Standardlegierung für Reibanwendungen, etwa für Kolbenbuchsen, darstellt. Ferner ist bekannt, Zinnbronzen, die neben Zinn und Kupfer zusätzlich Nickel, Zink, Eisen und Mangan aufweisen, für Reibanwendung oder auch für den Bergbau einzusetzen.

Als Beispiel für eine Kupfer-Zink-Legierung, die sich für auf Gleitung beanspruchte Maschinenteile, wie Lager, Schneckenräder, Zahnräder, Gleitschuhe und dergleichen, eignet, wird auf CH 223 580 A verwiesen. Offenbart wird ein Kupfergehalt von 50 - 70 Gew.-% mit einer Zulegierung von 2 - 8 Gew.-% Aluminium, 0,05 - 3 % Silizium und 0,5 - 10 Gew.-% Mangan sowie Rest Zink. Zusätzlich kann die Legierung bis maximal 10 Gew.-% Blei sowie 0,1 - 5 Gew.-% eines oder mehrerer Elemente aus der Gruppe Eisen, Nickel und Kobalt aufweisen. Des Weiteren ist aus der EP 0 407 596 B1 eine Sondermessinglegierung bekannt, die neben Kupfer, Zink, Mangan, Aluminium und Silizium als optionale Legierungsbestandteile Eisen, Nickel und Kobalt aufweist. Zusätzlich wird ein Anteil von 0,03 - 1 Gew.-% Sauerstoff vorgesehen. Des Weiteren offenbart DE 15 58 467 A eine weitere Sondermessinglegierung, die für auf Gleitung und Reibung beanspruchte Gegenstände vorgesehen ist. Neben Kupfer und einem Zinkanteil, der bis 45 Gew.-% reichen darf, liegt eine Zulegierung von Mangan und Silizium sowie Tellur vor. Zusätzlich stellen Fe, Ni, Al und Be weitere optionale Legierungsbestandteile dar. Ferner beschreiben DE 15 58 817 B2 und DE 101 59 949 C1 Kupferlegierungen mit einer breitbandigen Zusammensetzung, die einen verschleißreduzierten Lagerwerkstoff bilden.

Um bestimmte Eigenschaften eines aus einer Sondermessinglegierung hergestellten Produktes zu erreichen, werden Legierungen mit unterschiedlichen Legierungselementen eingesetzt. Für derartige Bauteile ist es somit erforderlich, entsprechend unterschiedliche Produkte zu bevorraten und vor allem auch den Umgang mit diesen unterschiedlichsten Legierungen zu beherrschen.

US 2009/0022620 A1 offenbart Cu-Legierungen, aus denen Rohre oder Stangen für Motoren oder Maschinen hergestellt werden, die gute Verschleiß-Eigenschaften haben und somit für eine zeitliche, variable Reib-Belastung ausgelegt sind. Die aus diesem Stand der Technik vorbekannte Messinglegierung umfasst 28 - 36% Cn, 0,5 - 2,3% Si, 1,5 - 2,5% Mn, 0,2 - 3,0% Ni, 0,5 - 1,5% Al, 0,1 - 1,0% Fe, Rest Kupfer sowie unvermeidbare Verunreinigungen vermischt mit Eisen-Nickel-Mangan-Siliziden in der Matrix. Die in den Ausführungsbeispielen konkret angegebenen Legierungen verfügen über 0,40% bzw. 0,55% Ni. Gemäß einem anderen Typ ist ein Si-Gehalt von 1,7% beschrieben.

Weber et al.: "Neuer Pb-freier Kupferwerkstoff für Gleitlageranwendungen in Verbrennungsmotoren und Getrieben", Metall: Fachzeitschrift für Metallurgie; Technik, Wissenschaft, Wirtschaft, GDMB-Verlag, Band 63, Nr. 11, Seiten 564-567 (1. November 2009) offenbart ein Gleitlager aus einer Sondermessinglegierung mit folgender Zusammensetzung: 58% Cu, 0,5% Pb, 1% Si, 2% Mn, 0,5% Ni, 0,5% Fe, 2% Al, Rest Zn.

Ausgehend von den beiden zuletzt genannten Dokumenten aus dem Stand der Technik liegt der Erfindung die Aufgabe zugrunde, eine zu diesen vorbekannten Legierungen alternative Legierung bereitzustellen, aus der Produkte hergestellt werden können, die sich durch eine hohe Festigkeit, einen verbesserten Verschleiß unter Reibbelastung sowie guten Notlaufeigenschaften bei Mangelschmierung auszeichnen.

Die vorstehende Aufgabe wird gelöst durch eine Sondermessinglegierung mit den Merkmalen des Anspruchs 1.

Diese Legierung verfügt über einen relativ hohen Zn-Gehalt. Dieses ist bemerkenswert, da der Cu-Gehalt mit 60 bis 62 Gew.-% eng gewählt ist. Um Legierungen mit den jeweils gewünschten unterschiedlichen Eigenschaften bereitzustellen, ist der Anteil des Cu-Äquivalentes relativ groß gewählt, typischerweise zwischen 45 und 65 Gew.-%. Somit erfolgt eine Einstellung der jeweiligen Legierung und damit der Eigenschaften des daraus hergestellten Produktes über eine Variation der am Cu-Äquivalent beteiligten Elemente. Diesbezüglich sind vor allem die Elemente Mn, Ni, Al und Si von Bedeutung. Durch eine Variation der Beteiligung dieser Elemente an der Sondermessinglegierung lassen sich beispielsweise der Anteil der α- und β-Phasen in der Matrix einstellen. So lassen sich Legierungen durch eine entsprechende Variation in diesen Elemente ausbilden, deren Produkte überwiegend eine α-Phase, überwiegend eine β-Phase oder eine Mischung aus beiden Phasen aufweisen. Ebenso lässt sich, ohne das Verarbeitungsverfahren ändern zu müssen, ein Sondermessinglegierungsprodukt mit unterschiedlicher Korngröße durch entsprechende Variationen vor allem dieser Elemente einstellen.

Neben den Hartphasen beeinflussen die Härte und die Zähigkeit der Legierung wesentlich die Eigenschaft der Reibschicht. Dabei zeichnet sich die erfindungsgemäße Legierung durch eine erstaunlich weite Spanne erzielbarer mechanischer Parameter aus, sodass Dehngrenze, Zugfestigkeit, Bruchdehnung, Härte und Zähigkeit verglichen mit bisher für Reibanwendungen eingesetzten Legierungen durch die Wahl der Verarbeitungsprozesse nach dem Legierungsguss in verbessertem Maß unabhängig voneinander einstellbar sind. Ein exakt für die Erfordernisse der Anwendung gewähltes Legierungsprodukt kann durch folgende Verarbeitungsprozesse nach dem Aufschmelzen der erfindungsgemäßen Bestandteile erzielt werden:
- Warmumformung direkt nach dem Legierungsguss, insbesondere Stranggießen, ohne einen weiteren Behandlungsschritt oder ausschließlich gefolgt durch einen abschließenden Glühschritt,
- Strangpressen mit einer direkt nachgeschalteten Kaltumformung gefolgt von einem abschließenden Glühschritt,
- Strangpressen mit nachfolgendem Zwischenglühen vor dem Ausführen einer Kaltumformung und einem abschließenden Glühschritt.

Diese Sondermessinglegierung zeichnet sich durch eine besonders hohe Bruchdehnung bei einer noch hinreichenden Festigkeit aus. Des Weiteren liegt ein besonders hoher Verschleißwiderstand vor, der auf einzeiliges Gefüge der Messingmatrix zurückgeführt wird. Zusätzlich hat sich herausgestellt, dass auch eine hohe Zähigkeit in Kombination mit den voranstehend genannten vorteilhaften mechanischen Eigenschaften erzielen lässt. Begründet ist diese Eigenschaft dadurch, dass die Matrix überwiegend aus α-Phase besteht. Die vorhandenen β-Phasen bilden kleine Inseln aus. Die rundlichen Silizide sind relativ unempfindlich gegen Kerbeinwirkungen.
- **Fig. 1:**: eine lichtmikroskopische Aufnahme des Strangpresszustands der erfindungsgemäßen Sondermessinglegierung im Querschliff mit 100-facher Vergrößerung,
- **Fig.2:**: den Strangpresszustand des erfindungsgemäßen Sondermessings aus Figur 1 als lichtmikroskopische Aufnahme mit 500-facher Vergrößerung,
- **Fig. 3:**: eine lichtmikroskopische Aufnahme des erfindungsgemäßen Sondermessings nach einem Weichglühen bei 450°C im Querschliff mit 50-facher Vergrößerung,
- **Fig. 4:**: eine lichtmikroskopische Aufnahme des Weichglühzustands des erfindungsgemäßen Sondermessings aus Figur 3 im Querschliff mit 500-facher Vergrößerung,

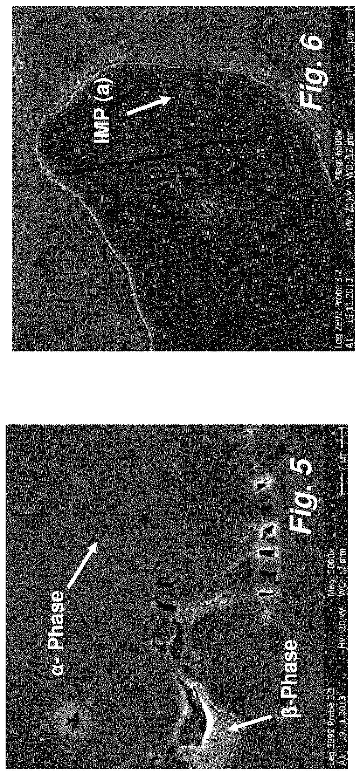

- **Fig. 5:**: eine rasterelektronenmikroskopische Aufnahme mit Sekundärelektronenkontrast des Legierungsendzustand des erfindungsgemäßen Sondermessings bei 3000-facher Vergrößerung und
- **Fig. 6:**: eine rasterelektronenmikroskopische Aufnahme mit Sekundärelektronenkontrast des Legierungsendzustands des erfindungsgemäßen Sondermessings bei 6500-facher Vergrößerung.

Für die erfindungsgemäße Sondermessinglegierung bilden sich im Gusszustand intermetallische Phasen, die im Strangpresszustand als rundliche im Korninnern einer α-Phase vorliegende Hartphasen bestimmt wurden. Im Strangpresszustand wurde eine überwiegende α-Phase gefunden, wobei an den Korngrenzen der α-Phase zusätzliche β-Phasenanteile vorliegen. Aus im Einzelnen nicht dargestellten Längsschliffen ergibt sich für die Messingmatrix eine deutliche Ausrichtung in Strangpressrichtung während die intermetallischen Phasen nur schwach orientiert sind. Konkret weist die Sondermessinglegierung dieser untersuchten Probe folgende Zusammensetzung auf (Angaben in Gew.-%):

| **Cu** | **Zn** | **Pb** | **Sn** | **Fe** | **Mn** | **Ni** | **Al** | **Si** | **As** | **Sb** | **P** | **Cr** |
|---|---|---|---|---|---|---|---|---|---|---|---|---|
| 61,0 | Rest | 0,02 | 0,05 | 0,5 | 1,8 | 2,0 | 0,3 | 0,8 | - | - | - | - |

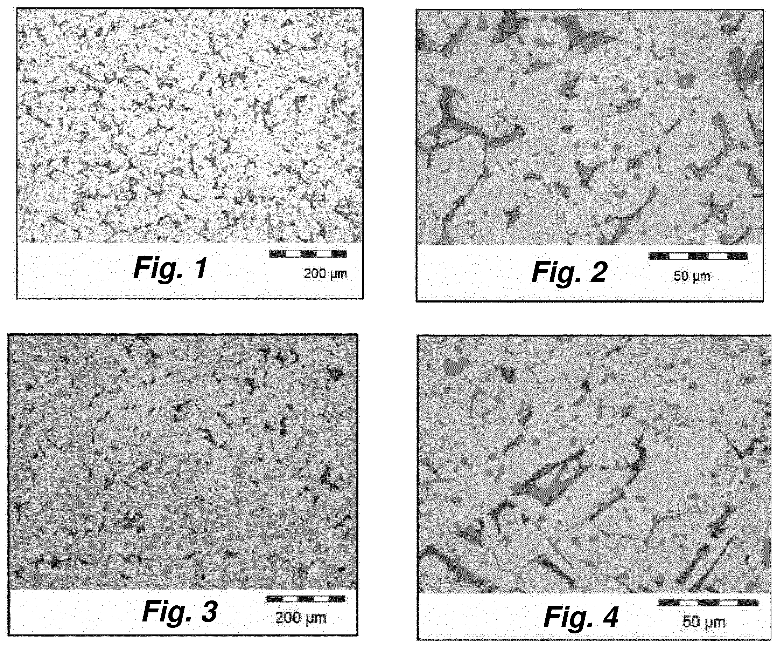

Das Strangpressprodukt dieser Sondermessinglegierung wird in einem nachfolgenden Prozessschritt durch ein Weichglühen behandelt, wobei der Weichglühzustand durch die in Figur 3 und Figur 4 gezeigten lichtmikroskopischen Aufnahmen von Querschliffen illustriert wird. Für eine Weichglühtemperatur von 450°C resultiert eine dominante α-Phase mit inselartigen β-Phasenanteilen. Für eine angehobene Weichglühtemperatur im Bereich von 550°C folgt eine einheitliche α-Phase, wobei die inselartigen β-Phasenanteile gegenüber der niedrigeren Weichglühtemperatur abnehmen.

Auf das Weichglühen folgt eine Kaltumformung, wobei der Umformungsgrad typischerweise im Bereich von 5- 15% Querschnittminderung gewählt wurde. Abschließend wird ein Endglühen ausgeführt, wobei das Legierungsgefüge keinen wesentlichen Unterschied zum weichgeglühten Zustand aufweist.

Für den Legierungsendzustand weisen die intermetallischen Phasen im Innern der Körner der Grundmatrix einphasige Strukturen mit einer mittleren Länge von ≤ 7 µm auf, wobei ein polykristalliner Aufbau nachgewiesen wurde. Aus den EDX-Messungen konnte zur chemischen Zusammensetzung der intermetallischen Phasen abgeleitet werden, dass neben (Fe, Mn, Ni)-Mischsiliziden insbesondere Eisensilizide der Form Fe₅Ni₃Si₂ und Fe₃Si vorliegen. An den Korngrenzen und in der β-Phase zeigen sich zusätzlich Hartphasenausscheidungen mit einer mittleren Größe ≤ 0,2 µm.

Bezüglich der mechanischen Eigenschaften weist dieses Sondermessing im Strangpresszustand eine 0,2%-Dehngrenze von -180-250 MPa, eine Zugfestigkeit Rₘ von 430 - 470 MPa und eine Bruchdehnung von 22 - 42 % auf. Im Endzustand der Verarbeitung liegen eine 0,2%-Dehngrenze von 350 - 590 MPa, eine Zugfestigkeit Rₘ von 400 - 650 MPa und eine Bruchdehnung von 3 - 19 % vor.

## Patentansprüche

1. Sondermessinglegierung **dadurch gekennzeichnet, dass** diese
60 - 62 Gew.-% Cu;
1,6 - 2,0 Gew.-% Mn;
1,8 - 2,2 Gew.-% Ni;
0,2 - 0,4 Gew.-% Al;
0,65 - 0,95 Gew.-% Si;
0,9 - 1,1 Gew.-% Fe;
≤ 0,1 Gew.-% Sn;
≤ 0,1 Gew.-% Pb;
und Rest Zn nebst unvermeidbaren Verunreinigungen enthält.

2. Sondermessinglegierungsprodukt mit einer Legierungszusammensetzung nach Anspruch 1, **dadurch gekennzeichnet, dass** das Sondermessinglegierungsprodukt durch Warmumformung, Glühen und Kaltziehen so eingestellt wird, dass die 0,2 %-Dehngrenze RP0,2 im Bereich von 350 - 590 MPa, die Zugfestigkeit Rm im Bereich von 400 - 650 MPa und die Bruchdehnung A5 im Bereich von 3 -19 % liegen.

3. Sondermessinglegierungsprodukt nach Anspruch 2, **dadurch gekennzeichnet, dass** das Sondermessinglegierungsprodukt ein auf eine zeitlich variable Reibbelastung ausgelegtes Bauteil ist, insbesondere eine Lagerbuchse, ein Gleitschuh, ein Schneckenrad oder ein Axiallager für einen Turbolader.

## Claims

1. Special brass alloy **characterised in that** it contains
60 - 62 % by weight Cu;
1.6 - 2.0 % by weight Mn;
1.8 - 2.2 % by weight Ni;
0.2 - 0.4 % by weight Al;
0.65 - 0.95 % by weight Si;
0.9 - 1.1 % by weight Fe;
≤ 0.1 % by weight Sn;
≤ 0.1 % by weight Pb;
and the remainder Zn together with unavoidable impurities.

2. Special brass alloy product with an alloy composition according to claim 1, **characterised in that** the special brass alloy product is adjusted by hot forming, annealing, and cold drawing in such a way that the 0.2 % elongation limit RP0.2 lies in the range from 350-590 MPa, the tensile strength Rm in the range from 400-650 MPa, and the elongation after fracture A5 lies in the range from 3-19 %.

3. Special brass alloy product according to claim 2, **characterised in that** the special brass alloy product is a component subjected to a time-variable friction loading, in particular a bearing sleeve or bushing, a sliding pad or shoe, a screw conveyor, or an axial bearing for a turbocharger.

## Revendications

1. Alliage de laiton spécial **caractérisé en ce qu'**il contient
60 à 62 % de poids de Cu ;
1,6 à 2,0 % de poids de Mn ;
1,8 à 2,2 % de poids de Ni ;
0,2 à 0,4 % de poids d'Al ;
0,65 à 0,95 % de poids de Si ;
0,9 à 1,1 % de poids de Fe ;
≤ 0,1 % de poids de Sn ;
≤ 0,1 % de poids de Pb ;
et le reste de Zn auxquels s'ajoutent les inévitables impuretés.

2. Produit d'alliage de laiton spécial avec une composition d'alliage selon la revendication 1 **caractérisé en ce que** le produit d'alliage de laiton spécial est conçu au terme du formage à chaud, du recuit et de l'étirage à froid de telle sorte que la limite d'élasticité à 0,2 % Rp0,2 est située dans une plage entre 350 et 590 MPa, la résistance à la traction Rm, dans une plage entre 400 et 650 MPa, et l'allongement à la rupture A5, dans une plage entre 3 et 19 %.

3. Produit en alliage de laiton spécial selon la revendication 2, **caractérisé en ce que** le produit d'alliage de laiton spécial est une pièce conçue pour être soumise à une friction variable dans le temps, notamment un coussinet, un patin coulissant, une roue hélicoïdale ou un palier axial pour un turbocompresseur.
